# FASCICULE DE BREVET EUROPEEN

(11) **EP 2 328 824 B1**
(45) Date de publication et mention de la délivrance du brevet: **22.07.2015**
(21) Numéro de dépôt: 09741343.9
(22) Date de dépôt: 28.09.2009
(51) Int. Cl.: B67C 3/24, B67C 7/00, B65G 47/86

(54) **PROCEDE ET DISPOSITIF DE POSITIONNEMENT DE RECIPIENTS ET INSTALLATION DE TRAITEMENT DE RECIPIENTS AYANT DES SECTIONS DIFFERENTES**
VERFAHREN UND VORRICHTUNG ZUR POSITIONIERUNG VON BEHÄLTERN UND ANLAGE ZUR BEHANDLUNG VON BEHÄLTERN MIT VERSCHIEDENEN QUERSCHNITTEN
METHOD AND DEVICE FOR POSITIONING CONTAINERS AND PLANT FOR TREATING CONTAINERS HAVING DIFFERENT CROSS SECTIONS

(30) Priorité: 01.10.2008 FR 0805417
(43) Date de publication de la demande: 08.06.2011
(73) Titulaire: SERAC GROUP, 72400 La Ferté-Bernard (FR)
(72) Inventeur: GOURLAOUEN, Xavier, F-72000 Le Mans (FR)
(74) Mandataire: Lavialle, Bruno François Stéphane
(86) Numéro de dépôt international: PCT/FR2009/001144
(87) Numéro de publication internationale: WO 2010/037924

(56) Documents cités:
- EP-A- 0 659 683
- EP-A- 1 041 034
- US-A1- 2005 103 605

## Description

La présente invention concerne un procédé de positionnement de récipients dans une installation de traitement de récipients telle qu'une installation de conditionnement de produit dans des récipients, ou une installation de transport, de remplissage ou de bouchage de récipients. L'invention concerne également un dispositif de positionnement et une installation comportant de tels dispositifs.

### ARRIERE PLAN DE L'INVENTION

On s'intéresse plus particulièrement ici aux récipients comprenant un col qui comporte une collerette en saillie surmontée d'un goulot.

Une installation de conditionnement de liquides définit une ligne de déplacement des récipients le long de laquelle se succèdent des installations telles qu'une installation de remplissage, une installation de bouchage et éventuellement une installation de lavage ou rinçage des récipients, une installation de stérilisation...

Une installation de remplissage de récipients comprend par exemple une plateforme rotative ayant un pourtour équipé de buses de remplissage et de dispositifs de positionnement des récipients sous les buses de remplissage. Une étoile d'amenée des récipients et une étoile d'évacuation des récipients remplis, elles-aussi rotatives et équipées en périphérie de dispositifs de positionnement des récipients, jouxtent la plateforme.

De la même manière, une installation de bouchage de récipients comprend une plateforme rotative ayant un pourtour équipé, d'une part, de broches de vissage de bouchons, d'autre part, et de dispositifs de positionnement des récipients sous les broches de vissage. Une étoile d'amenée des récipients et une étoile d'évacuation des récipients bouchés, elles-aussi rotatives et équipées en périphérie de dispositifs de positionnement des récipients, jouxtent la plateforme.

La ligne de déplacement des récipients croise les axes des buses de remplissage et des broches de vissage.

Les dispositifs de positionnement des récipients sont généralement agencés pour maintenir l'axe central du goulot des récipients sur là ligne de déplacement des récipients, l'axe central du récipient constituant le point de référence pour le positionnement des récipients.

Dans un premier mode de réalisation, les dispositifs de positionnement comprennent des alvéoles ménagées sur un pourtour des plateformes et des étoiles pour recevoir la partie du col du récipient s'étendant sous la collerette, ladite collerette reposant sur un bord de l'alvéole. Les alvéoles sont ouvertes latéralement en regard d'un guide de maintien des récipients dans les alvéoles.

Dans un second mode de réalisation, les dispositifs de positionnement sont réalisés sous forme de pinces dont les mâchoires viennent serrer le col.

Lorsque les installations sont destinées au traitement de récipients ayant des goulots de sections différentes, il est nécessaire d'utiliser des dispositifs de positionnement adaptés à chaque section de récipients de manière à conserver le positionnement de l'axe central du goulot sur la ligne de déplacement. Les opérations d'adaptation des installations à chaque section de goulot sont longues et nécessitent l'arrêt des installations occasionnant une baisse de productivité d'autant plus importante que le nombre de dispositifs de positionnement est élevé. US 2005/0103605 A1 décrit un procédé et dispositif selon le préambule des revendications 1 et 4.

### OBJET DE L'INVENTION

Par l'invention, on entend proposer un moyen permettant de positionner de manière simple, précise et fiable les récipients dans une installation de traitement en facilitant éventuellement la prise en compte de différentes sections de récipients.

### RESUME DE L'INVENTION

A cet effet, on prévoit, selon l'invention, un procédé de positionnement de récipient dans une installation de traitement de récipients ayant des goulots de sections différentes, selon la revendication 1, le procédé comprenant l'étape de déplacer les récipients le long d'une ligne de déplacement des récipients dans l'installation en maintenant un point de référence des goulots sur cette ligne de déplacement, la ligne de déplacement étant commune à toutes les sections de goulots et le point de référence des goulots étant le même quelle que soit la section du goulot du récipient. Le point de référence est situé sur une surface latérale externe du goulot de telle manière que les goulots tangentent la ligne de déplacement.

Ainsi, le point de référence utilisé pour le positionnement des récipients est une portion de la surface latérale externe des récipients qui tangente la ligne de déplacement. Le point de référence est donc un élément matériel (par opposition à l'axe du goulot qui est lui immatériel) de sorte qu'il est possible de venir en contact direct du point de référence pour assurer un positionnement qui sera extrêmement précis. Les différences de sections vont en outre se répercuter principalement dans un seul sens par rapport au point de référence et il est de ce fait plus facile de les compenser.

L'invention a également pour objet un dispositif de positionnement de récipients selon la revendication 4, comprenant un corps et un col comportant une collerette en saillie et un goulot surmontant la collerette, le dispositif comprenant une butée possédant une face de référence pour l'appui d'une surface latérale externe du goulot et une mâchoire qui possède une face de support d'une partie de la collerette et une face d'appui pour une portion de surface latérale externe du col, la mâchoire étant montée sur un corps du dispositif pour être mobile selon une direction de coulissement normale à la face de référence pour recevoir des goulots de différentes sections.

Le dispositif de positionnement conforme à l'invention possède une structure relativement simple qui lui permet de s'adapter à différentes sections de goulot.

Avantageusement, la mâchoire est reliée au corps par un élément de rappel élastique rappelant la mâchoire vers une position correspondant à la plus petite section de goulot.

Ce mode de réalisation présente également l'avantage de permettre, en cas de bourrage, de dégager le goulot du ou des récipients concernés par le recul de la mâchoire à l'encontre de l'effort exercé par l'élément de rappel élastique.

De préférence alors, la mâchoire comprend une plaque inférieure et une plaque supérieure parallèles l'une à l'autre et pourvues chacune d'une découpe en V pour recevoir une portion du col de telle manière que la collerette repose sur la plaque inférieure.

Ceci procure un très bon maintien des goulots dans le dispositif en particulier lorsque la butée se trouve opposée aux découpes en V et à une hauteur intermédiaire entre les plaques. Le risque d'un basculement de la base du récipient sous l'effet de la force centrifuge est en outre limité.

Selon un premier mode de réalisation particulier la butée est solidaire d'un doigt pivotant entre une position active de référence et une position escamotée pour permettre la mise en place du goulot dans le dispositif et l'extraction du goulot du dispositif.

Ainsi, la butée est solidaire du corps du dispositif limitant les frottements du goulot sur la butée. Ceci permet d'éviter de recourir à un rail fixe servant de butée, un tel rail étant difficile à positionner précisément, occasionnant des frottements sur les goulots, perturbant l'écoulement des flux d'air laminaires dans les installations aseptiques et compliquant le nettoyage.

Selon un deuxième mode de réalisation, le corps du dispositif étant destiné à être monté sur une plate-forme mobile, la butée comprend un rail de guidage s'étendant en regard de la plateforme.

Nonobstant les inconvénients cités ci-dessus, l'utilisation d'un rail de guidage présente l'avantage d'être relativement peu onéreux tout en étant fiable. Ce mode de réalisation est parfaitement adapté à des installations de petite taille aux cadences relativement faibles occasionnant ainsi peu de frottements des goulots sur le rail.

L'invention a en outre pour objet une installation de traitement de récipients ayant des goulots de sections différentes, comprenant d'au moins une plate-forme équipée de dispositifs présentant les caractéristiques énoncées ci-dessus.

### BREVE DESCRIPTION DES DESSINS

D'autres caractéristiques et avantages de l'invention ressortiront à la lecture de la description qui suit de modes de mise en oeuvre particuliers non limitatifs de l'invention.

Il sera fait référence aux dessins annexés, parmi lesquels :
- la figure 1 est une vue partielle, en perspective avec écorché, d'une installation comportant des dispositifs de positionnement selon un premier mode de réalisation, en utilisation avec des goulots de grande section,
- la figure 2 est une vue en perspective, de dessous et avec des transparences, d'un tel dispositif de positionnement,
- les figures 3 et 4 sont des vues partielles agrandies de cette installation décomposant le transfert de récipients d'une plateforme à l'autre,
- la figure 5 est une vue partielle agrandie en perspective, avec des transparences montrant le transfert, entre deux dispositifs de positionnement, d'un récipient ayant un goulot de petite section,
- la figure 6 est une vue analogue à la figure 4 dans le cas du transfert d'un récipient ayant un goulot de petite section,
- la figure 7 est une vue analogue à la figure 1 illustrant un transfert de récipients de petits goulots vers une plateforme de remplissage,
- la figure 8 est une vue partielle agrandie, en perspective et avec des transparences, de l'installation lors de ce transfert de récipients vers la plateforme de remplissage,
- la figure 9 est une vue analogue à la figure 8 dans le cas de récipients à goulots de grande section,
- la figure 10 est une vue partielle en perspective, de dessous et avec des transparences, de l'installation lors du transfert d'un récipient à goulot de grande section,
- la figure 11 est une vue schématique partielle en perspective, avec des transparences, d'une installation comportant des dispositifs de positionnement selon un deuxième mode de réalisation,
- la figure 12 est une vue partielle en perspective et de dessus d'une installation comportant des dispositifs de positionnement selon un troisième mode de réalisation,
- la figure 13 est une vue partielle en perspective et de dessous de cette installation,
- les figures 14 et 15 sont des vues de dessous du dispositif de positionnement selon le troisième mode de réalisation, pour la réception d'un goulot de grande section et d'un goulot de petite section respectivement.

### DESCRIPTION DETAILLEE DE L'INVENTION

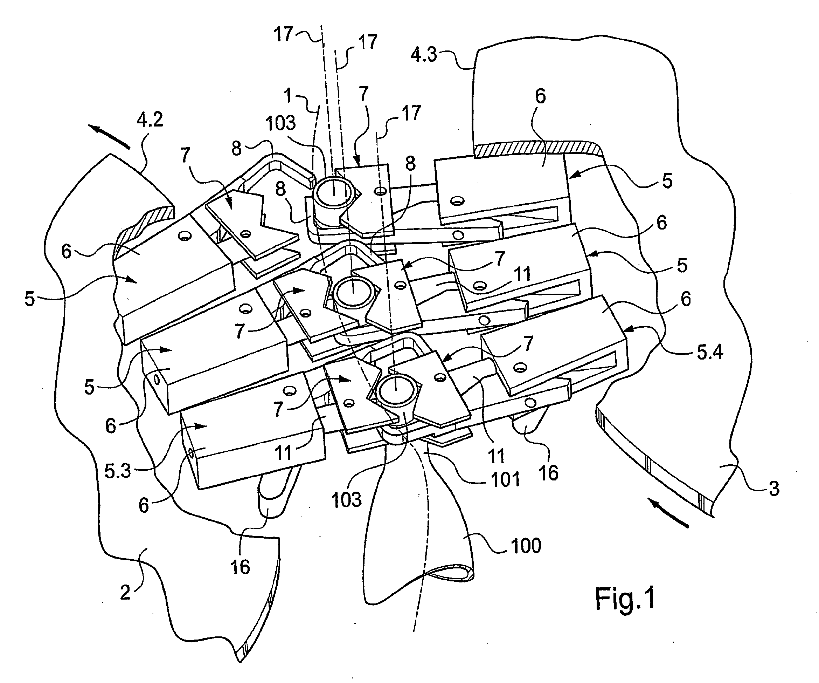

L'invention est ici décrite en relation avec une installation de traitement de récipients (visible sur la figure 1) ayant un corps 100 et un col 101 comportant une collerette 102 surmontée d'un goulot 103. L'installation est destinée à traiter des récipients dont les goulots ont des sections différentes.

L'installation ici décrite définit une ligne 1 de déplacement des récipients et comprend une plateforme amont 2 et une plateforme aval 3 se succédant le long de la ligne 1. L'installation de traitement ici décrite est une installation extrêmement simple pour la clarté de l'exposé de l'invention. L'invention est néanmoins applicable à des installations beaucoup plus importantes, telles que les installations industrielles de conditionnement de liquides qui comprennent une installation de lavage ou rinçage des récipients, une installation de stérilisation, une installation de remplissage et une installation de bouchage des récipients remplis. Chacune de ces installations comprend par exemple une plateforme rotative et des dispositifs rotatifs ou linéaires pour amener les récipients sur la plateforme et les évacuer de la plateforme.

La plateforme amont 2 et la plateforme aval 3 ont chacune un pourtour circulaire 4.2, 4.3 pourvu d'une pluralité de dispositifs 5 de positionnement des récipients (seule une partie des dispositifs 5 a été représentée pour ne pas alourdir les figures). Les dispositifs de positionnement 5 assurent un maintien des récipients par leur col 101, lesdits récipients étant suspendus aux dispositifs par leur collerette 102.

L'installation, et plus particulièrement les dispositifs de positionnement 5, sont agencés pour mettre en oeuvre le procédé de positionnement conforme à l'invention, qui comprend l'étape de déplacer les récipients dans l'installation le long de la ligne de déplacement 1 en maintenant un point de référence des goulots 103 sur la ligne de déplacement 1. Selon l'invention, la ligne de déplacement 1 est commune à toutes les sections de goulots, le point de référence des goulots est le même quelle que soit la section du goulot 103 du récipient et est situé sur une surface latérale externe du goulot 103, de préférence de telle manière que les goulots 102 tangentent la ligne de déplacement 1.

Trois modes de réalisation des dispositifs de positionnement vont maintenant être décrits. Les éléments identiques ou analogues d'un mode de réalisation à l'autre porteront la même référence numérique.

Dans le premier mode de réalisation, représenté aux figures 1 à 10, le dispositif de positionnement 5 comprend un corps 6 monté sous la plateforme 2, 3 correspondante, une mâchoire 7 montée pour coulisser sur le corps 6 et un doigt 8 monté pour pivoter sur le corps 6.

La mâchoire 7 comprend une plaque supérieure 9.1 et une plaque inférieure 9.2 qui s'étendent parallèlement en regard l'une de l'autre en étant espacées l'une par rapport à l'autre. L'écartement entre les plaques 9.1, 9.2 est tel que :
- la collerette puisse être en partie introduite entre les plaques 9.1, 9.2 et reposer sur la plaque inférieure 9.2,
- la plaque inférieure 9.2 puisse prendre latéralement appui contre la portion du col située immédiatement sous la collerette 102,
- la plaque supérieure 9.1 puisse prendre latéralement appui contre une portion du goulot 103 située au-dessus de la collerette 102.

Chaque plaque 9.1, 9.2 possède un bord dans lequel est ménagée une découpe 10 pour recevoir le col 101 des récipients (les faces des découpes 10 forment des faces d'appui de la mâchoire contre le col). La découpe 10 a ici une forme en V d'angle égal à 108° environ et est centrée sur une direction radiale de la plateforme correspondante. La découpe 10 de chaque plaque offre deux points d'appui contre le col 101 du récipient, de part et d'autre de la direction radiale.

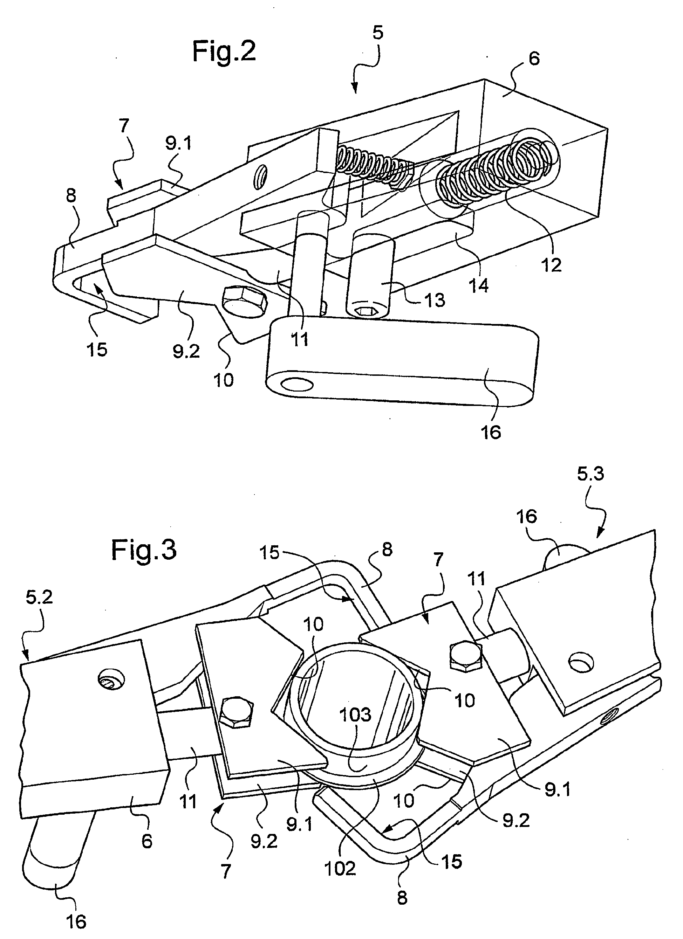

A l'opposé de la découpe 10, chaque plaque 9.1, 9.2 possède un bord solidaire d'un coulisseau 11 reçu dans le corps 6 à coulissement selon une direction radiale de la plateforme correspondante. Le coulisseau 11 autorise un déplacement de la mâchoire 7 entre deux positions extrêmes, à savoir une position sortie maximale correspondant à une petite section de goulot et une position sortie minimale correspondant à une grande section de goulot. Un ressort 12 est intercalé entre un épaulement du corps 6 et un épaulement du coulisseau 11 pour rappeler élastiquement la mâchoire 7 vers la position sortie maximale. Un pion 13 (visible figure 2) s'étend perpendiculairement depuis le coulisseau 11 au travers d'une ouverture 14 oblongue ménagée dans le corps 6 de sorte que le pion 13 a une extrémité libre en saillie à l'extérieur du corps 6 pour permettre la manoeuvre de la mâchoire 7 entre ses deux positions extrêmes.

Le doigt 8 est coudé et s'étend pour partie entre les plaques 9.1, 9.2 qui forment des parois qui guident une portion du doigt lors du pivotement de celui-ci. Le doigt 8 possède une portion d'extrémité libre et une portion d'extrémité articulée au corps 6 pour pivoter entre une position de retenue (ou position active de référence) dans laquelle la portion d'extrémité libre a une face 15 (ou face de référence) s'étendant perpendiculairement à la direction de coulissement du coulisseau 11 en regard des découpes 10 et une position de libération (ou position escamotée) dans laquelle la portion d'extrémité libre est dégagée de l'espace frontal des découpes 10. Un levier 16 (mieux visible figure 2) est solidaire de l'axe d'articulation du doigt 8 au corps 6 pour s'étendre en saillie à l'extérieur du corps 6 et permettre la manoeuvre du doigt 8 entre ses deux positions. Le dispositif de positionnement 5 est monté sur la plateforme de telle manière que la face 15 tangente la ligne de déplacement 1.

Un transfert (dont les étapes finales sont visibles sur la figure 1) d'un récipient d'une plateforme à une autre va maintenant être décrit en relation avec les figures 1 à 6. Dans cet exemple, la plateforme aval 3 est une plateforme de vissage pourvue, de façon connue en elle-même, de broches de vissage s'étendant verticalement au-dessus des dispositifs de positionnement 5. Seul l'axe de rotation 17 des broches de vissage a été ici représenté. Les broches de vissage sont ici reliées à la plate-forme aval 3 par un dispositif permettant un déplacement radial de chaque broche de vissage pour régler leur position par rapport à l'axe de rotation de la plateforme aval 3 en fonction de la section des goulots reçus dans les dispositifs de positionnement 5.

Le fonctionnement est dans ce cas identique que le goulot ait une petite section ou une grande section.

Le col 101 du récipient est maintenu dans un dispositif de maintien 5 de la plateforme amont 2 (ce dispositif de positionnement porte la référence 5.2 pour plus de commodité dans la description) :
- la collerette est reçue entre les plaques 9.1, 9.2 et repose sur la surface supérieure de la plaque inférieure 9.2 (cette surface forme une face de support),
- la plaque inférieure 9.2 prend latéralement appui contre la portion du col située immédiatement sous la collerette 101,
- la plaque supérieure 9.1 prend latéralement appui contre une portion du goulot 103 située au-dessus de la collerette 101,
- la mâchoire 7 pousse le goulot 103 contre la face 15 du doigt 8 en position de retenue.

La portion de surface externe du goulot en appui contre la face 15 constitue un point de référence tel que le goulot tangente la ligne de déplacement 1.

La rotation de la plateforme amont 2 va amener le récipient vers le point de tangence de la plateforme amont 2 avec la plateforme aval 3. Un dispositif de positionnement 5 de la plateforme aval 3 (ce dispositif de positionnement porte la référence 5.3 pour plus de commodité dans la description) arrive en correspondance du dispositif de positionnement 5.2 portant le récipient. Le dispositif de positionnement 5.3 a son doigt 8 en position de libération de sorte que, en amont du point de tangence des plateformes amont 2 et aval 3, la mâchoire 7 du dispositif de positionnement 5.3 peut prendre appui contre le col du récipient maintenu par le dispositif de positionnement 5.2.

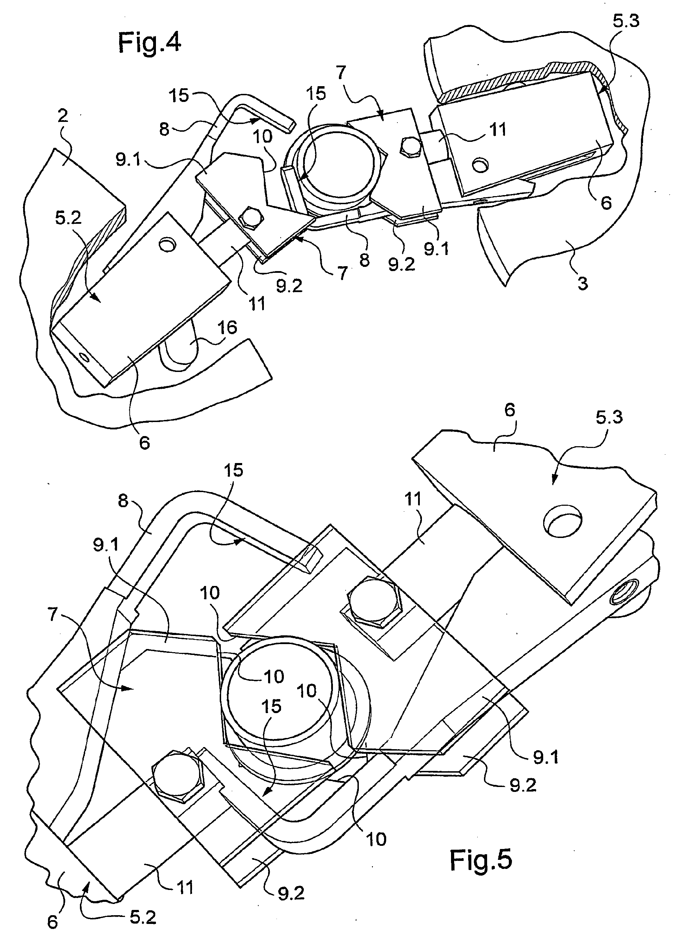

A mesure que le récipient se rapproche du point de tangence des plateformes amont 2 et aval 3, une came solidaire du bâti de l'installation agit sur le pion 13 pour déplacer la mâchoire 7 du dispositif de positionnement 5.3 jusqu'à ce que ladite mâchoire 7 décolle le goulot de la face 15 du doigt 8 du dispositif de positionnement 5.2. Des cames fixées au bâti de l'installation respectivement légèrement en amont et en aval du point de tangence des plateformes amont 2 et aval 3 agissent sur les leviers 16 pour amener le doigt 8 du dispositif de positionnement 5.2 en position de libération (figure 3, représentée avec une grande section de goulot) et le doigt 8 du dispositif de positionnement 5.3 en position de retenue (figure 5, représentée avec une petite section de goulot).

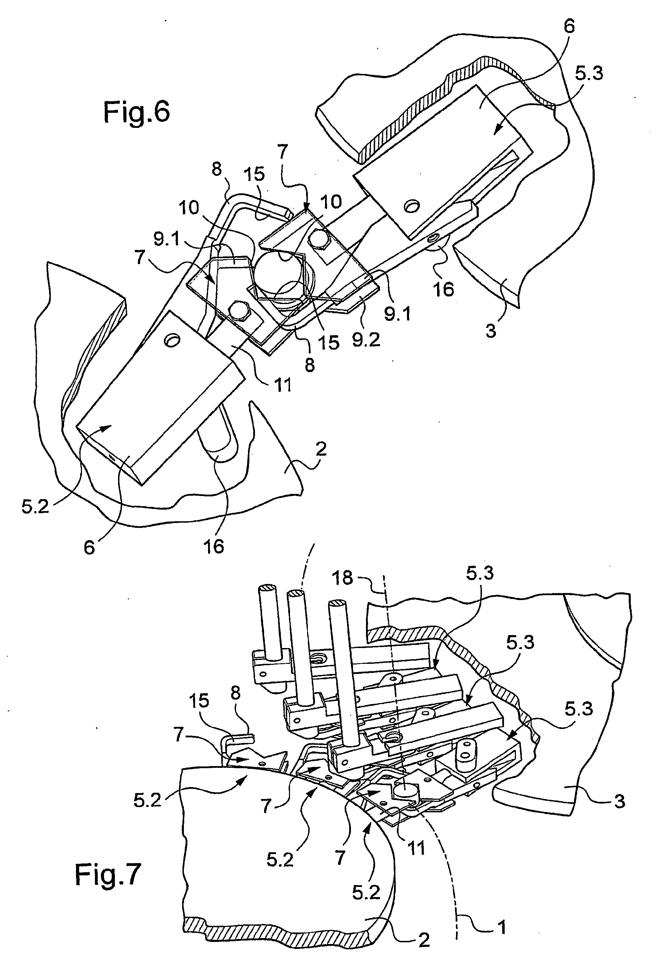

A mesure que le récipient s'éloigne du point de tangence des plateformes amont 2 et aval 3, la pression exercée sur le col par la mâchoire 7 du dispositif de positionnement 5.2 diminue de sorte que le ressort 12 de rappel de la mâchoire 7 du dispositif de positionnement 5.3 vient appliquer une portion de surface externe du goulot du récipient contre la face 15 du doigt 8 du dispositif de positionnement 5.3 de sorte que cette portion constitue un point de référence qui vient tangenter la ligne de déplacement 1 (phase représentée avec une grande section de goulot sur la figure 4 et avec une petite section de goulot sur la figure 6). La portion de surface externe constituant le point de référence pour la plate-forme aval 3 est diamétralement opposé à la portion de surface externe constituant le point de référence pour la plateforme amont 2.

On peut constater sur la figure 1 que la ligne de déplacement 1 comprend des tronçons circulaires centrés chacun sur un axe de rotation des plateformes 2, 3 et le point de référence pour une plateforme est d'un côté du goulot opposé à l'axe de rotation de cette plateforme. Lors du transfert, le procédé comprend ainsi l'étape de faire passer les récipients d'une plateforme à l'autre en faisant passer les goulots des récipients d'un côté à l'autre de la ligne de déplacement et simultanément le point de référence d'un côté à l'autre des goulots.

Le transfert d'un récipient va maintenant être décrit dans le cas où la plateforme aval 3 est une plate-forme de remplissage en référence aux figures 7 à 10.

La plateforme aval 3 est alors équipée de buses de remplissage qui s'étendent chacune au-dessus d'un dispositif de maintien 5 (seul l'axe 18 d'une des buses de remplissage a été représenté sur la figure 7).

Le procédé de l'invention prévoit, dans le mode de mise en oeuvre décrit, que dans la zone de remplissage de l'installation, et plus particulièrement sur la plate-forme aval 3, la ligne de déplacement 1 soit définie de telle manière que les goulots de plus petite section soient centrés sous les buses, les buses de remplissage délivrant un jet ayant une section inférieure à la plus petite section de goulot. On comprend que, comme le point de référence se trouve sur la surface latérale externe du goulot, le goulot de plus grande section ne sera pas centré sous la buse de remplissage. Ceci ne pose toutefois pas de problème tant que le jet ne vient pas toucher la surface interne dudit goulot (ce qui se produirait par exemple si le goulot de plus grande section avait une épaisseur trop importante).

Le transfert vers la plateforme aval 3 en zone de remplissage est décrit dans une hypothèse selon laquelle, sur la plateforme amont 2, la ligne de déplacement 1 a été définie en tenant compte de la plus grande section de goulot de sorte qu'un recentrage des goulots est nécessaire lors du passage sur la plateforme aval 3.

Les doigts 8 des dispositifs de positionnement 5.3 sont plus courts que les doigts 8 des dispositifs de positionnement 5.2.

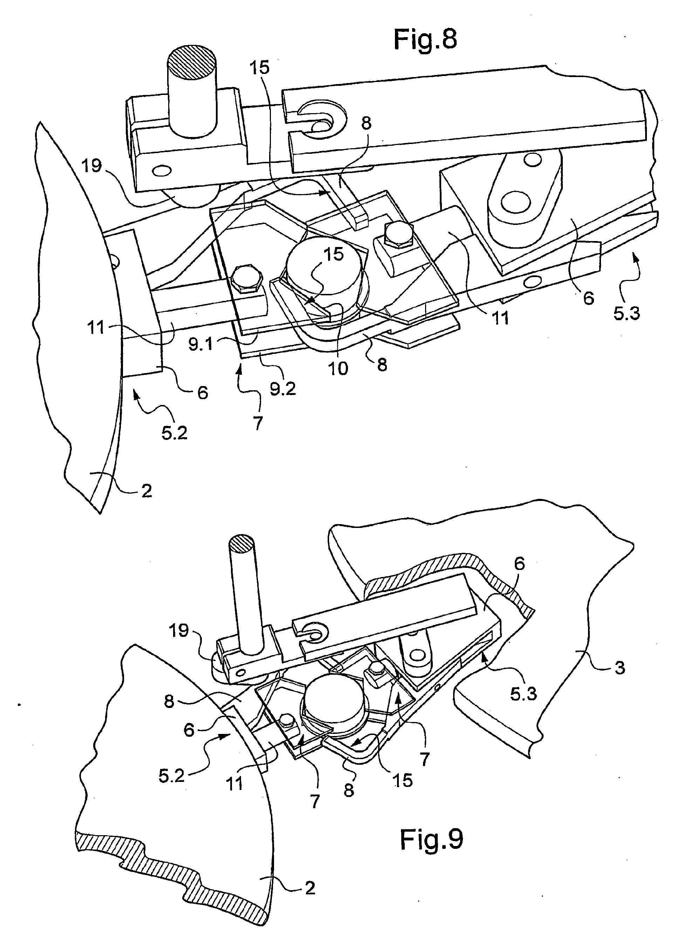

Le passage d'un goulot de plus petite section vers la plateforme aval 3 ne pose pas de problème (voir la figure 8) et se déroule comme précédemment.

En revanche, le passage d'un goulot de plus grande section vers la plateforme aval 3 suppose d'empêcher une interférence entre ledit goulot et le doigt 8 du dispositif de positionnement 5.3 (voir la figure 9) .

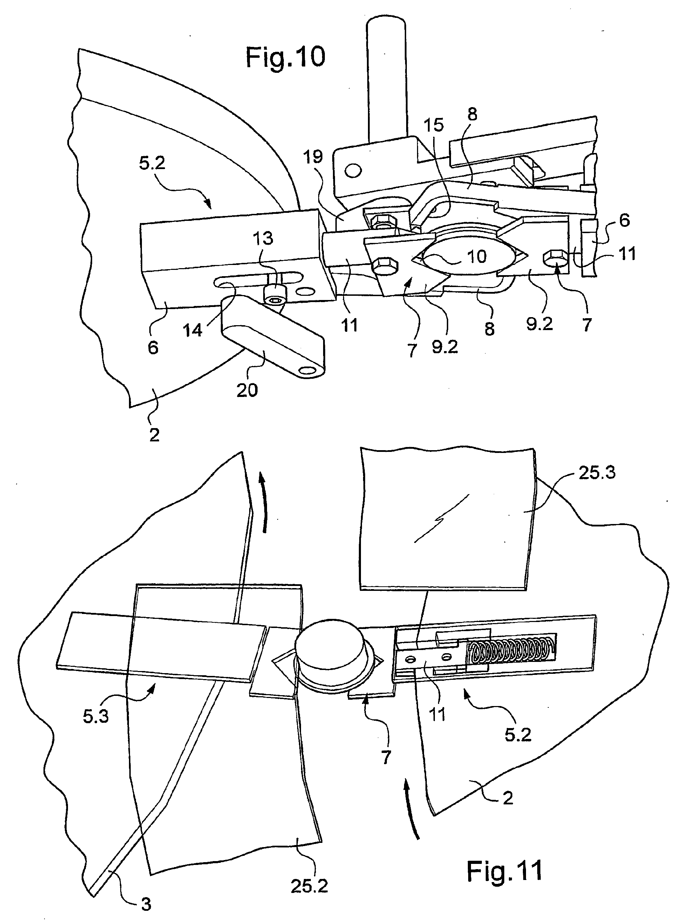

Pour ce faire, il est prévu au-dessus de chaque dispositif de positionnement 5.3 une came 19 solidaire de la plateforme aval 3. La came 19 est positionnée pour, lorsque le goulot est prisonnier entre les mâchoires 7 des dispositifs de positionnement 5.2, 5.3 et que les doigts 8 de ces dispositifs sont en position de libération, repousser le goulot vers le dispositif de positionnement 5.3 à l'encontre du ressort de rappel de la mâchoire 7 dudit dispositif de manière à permettre d'amener le doigt 8 dudit dispositif en position de retenue (voir la figure 10).

Dans le deuxième mode de réalisation, représenté à la figure 11 (la plateforme amont 2 se trouve à droite), le dispositif comprend comme précédemment un corps 6 recevant une mâchoire 7 à coulissement entre une position sortie maximale dans laquelle elle est rappelée élastiquement et une position sortie minimale. La structure de la mâchoire 7 ne comprend plus qu'une plaque inférieure mais peut être identique à celle précédemment décrite.

La butée correspondant à chaque plateforme est formée par un rail de guidage 25.2, 25.3 qui est fixé au bâti de l'installation sur la ligne de déplacement légèrement au-dessus de la mâchoire 7. Le rail de guidage 25.2, 25.3 entoure la plateforme 2, 3 concernée entre la zone d'amenée des récipients et la zone d'évacuation des récipients de telle manière que les mâchoires 7 poussent les goulots contre une face du rail de guidage 25.2, 25.3 (formant une face de référence) sous l'action du ressort de rappel des mâchoires vers leur position de sortie maximale.

Le point de référence est constitué par la portion de surface latérale externe du goulot en contact avec le rail de guidage correspondant. On comprend que le point de référence et le centre du goulot s'étendent sur une direction radiale de la plateforme.

Au point de tangence, le goulot a quitté l'appui du rail de guidage 25.1 et n'est plus maintenu que par les mâchoires 7 en regard avant de reprendre appui contre le rail de guidage 25.2.

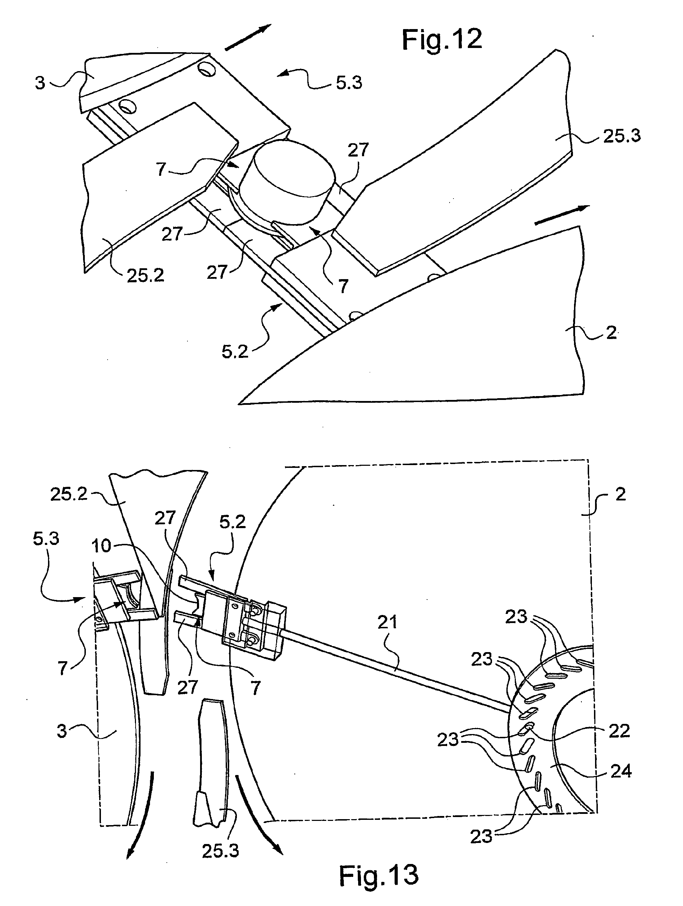

Dans le troisième mode de réalisation, représenté aux figures 12 à 15, l'installation comprend comme dans le deuxième mode de réalisation des rails de guidage 25.2, 25.3 entourant partiellement les plateformes amont 2 et aval 3 respectivement et formant une butée pour un point de référence des goulots situé sur un côté de la surface latérale externe de ceux-ci opposé à la plateforme concernée.

Le dispositif de maintien 5 comprend un corps 6 fixé sur la plateforme concernée et une mâchoire 7 montée pour coulisser sur le corps 6. La mâchoire 7 a une structure identique à celle du premier mode de réalisation, la découpe 10 étant cependant en portion de cercle de rayon égal au rayon du goulot de plus grande section.

Chaque dispositif de positionnement 5 comprend un moyen de réglage en position de la mâchoire 7 le long de la direction de coulissement qui est une direction radiale de la plateforme. Le moyen de réglage comprend une tringle 21 ayant une extrémité reliée à la mâchoire 7 et une extrémité opposée pourvue d'un ergot 22 reçu dans des fentes 23 ménagées dans une couronne 24 montée sur la plateforme pour être réglable en position angulaire par rapport à ladite plateforme. Les fentes 23 sont inclinées par rapport à la direction de coulissement de sorte qu'une modification de la position angulaire de la couronne 24 va provoquer un coulissement de la tringle 21, les bords de la fente 23 faisant office de came. Ceci permet de régler simultanément la position de toutes les mâchoires 7 d'une plateforme.

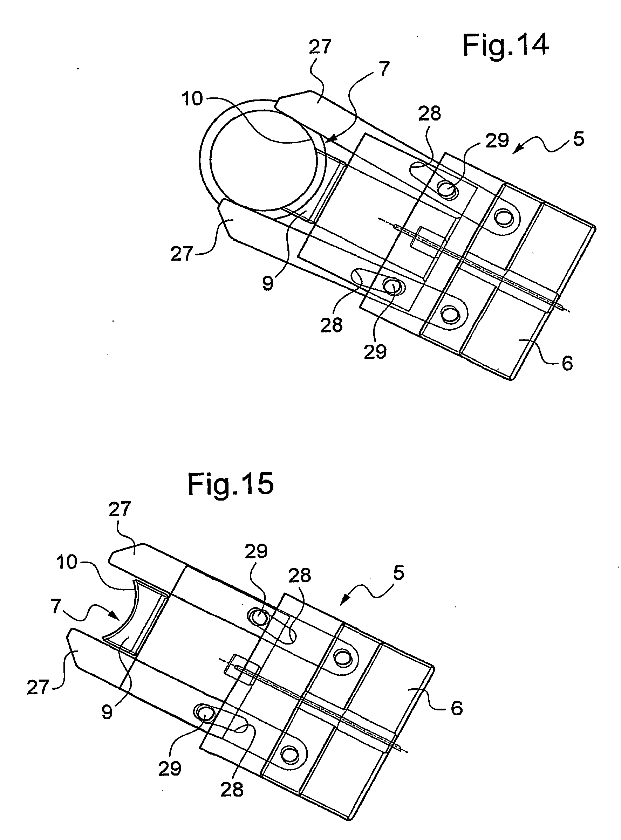

Le dispositif de positionnement 5 comprend également deux bras latéraux 27 ayant des extrémités articulées au corps 6 et des extrémités libres de support de la collerette réglables en écartement de manière synchronisée avec la mâchoire 7 entre deux positions extrêmes correspondant à deux sections extrêmes de goulots (ces positions sont visibles sur les figures 14 et 15).

Les bras latéraux 27 sont reliés à la mâchoire 7 par des éléments de came tels qu'ils provoquent un déplacement synchronisé des bras 27 avec la mâchoire 7. Les éléments de came comprennent une rainure 28 ménagée dans chaque bras latéral 27 avec une inclinaison par rapport à la direction de coulissement pour recevoir un pion 29 solidaire de la mâchoire 7.

La mâchoire 7 est montée sur la tringle 21 pour coulisser selon un débattement de sécurité en cas de mauvaise introduction du goulot. Un ressort intercalé entre la tringle et le coulisseau maintient ce débattement à sa valeur minimum correspondant à une longueur maximale de l'ensemble tringle/mâchoire.

Les rails de guidage 25.2, 25.3 sont fixés à une hauteur intermédiaire entre les plaques des mâchoires.

La position de la mâchoire 7 peut être réglée pour laisser un léger jeu entre le goulot, le rail de guidage et la mâchoire de manière à limiter les frottements sur le goulot.

Bien entendu, l'invention n'est pas limitée aux modes de mise en oeuvre décrits mais englobe toute variante entrant dans le champ de l'invention telle que définie par les revendications.

La découpe 10 peut avoir une forme différente de celle décrite comme une forme arrondie ou une forme en V d'angle différent de 108° comme par exemple un angle de 120°. La mâchoire peut être monobloc ou assemblée.

Une inversion cinématique des modes de réalisation décrits est envisageable, le rail étant par exemple réglable en position.

La face de référence peut ainsi être formée par la face d'appui de la mâchoire, notamment dans le troisième mode de réalisation réalisé.

La ligne de référence peut être tout ou partie rectiligne ou tout ou partie circulaire.

## Revendications

1. Procédé de positionnement de récipient dans une installation de traitement de récipients ayant des goulots (103) de sections différentes, le procédé comprenant l'étape de déplacer les récipients le long d'une ligne de déplacement (1) des récipients dans l'installation en maintenant un point de référence des goulots sur cette ligne de déplacement, la ligne de déplacement étant commune à toutes les sections de goulots et le point de référence des goulots étant le même quelle que soit la section du goulot du récipient, **caractérisé en ce que** le point de référence est situé sur une surface latérale externe du goulot de telle manière que les goulots tangentent la ligne de déplacement, le positionnement étant effectué en laissant libre d'accès la zone s'étendant à l'aplomb du goulot du récipient,
la ligne de déplacement (1) comprenant au moins un tronçon circulaire centré sur un axe de rotation et le point de référence est d'un côté du goulot opposé à l'axe de rotation.

2. Procédé selon la revendication 1, dans lequel, l'installation comprenant deux plateformes (2, 3) rotatives de transport tangentes l'une à autre et la ligne de déplacement (1) s'enroulant au moins partiellement autour de ces plateformes, le procédé comprend l'étape de faire passer les récipients d'une plateforme à l'autre en faisant passer les goulots (103) des récipients d'un côté à l'autre de la ligne de déplacement et simultanément le point de référence d'un côté à l'autre des goulots.

3. Procédé selon la revendication 1, dans lequel l'installation de traitement comprenant dans une zone de remplissage au moins une buse de remplissage, la ligne de déplacement (1) commune à toutes les sections de goulots (103) est définie dans la zone de remplissage pour s'étendre sous la buse de remplissage en étant latéralement décalée par rapport à celle-ci de telle manière que le goulot de plus petite section soit centré sous la buse de remplissage.

4. Dispositif de positionnement le long d'une ligne de déplacement de récipients comprenant un corps (100) et un col (101) comportant une collerette (102) en saillie et un goulot (103) surmontant la collerette, **caractérisé en ce que** le dispositif comprend une butée possédant une face de référence (15, 25) pour l'appui d'une surface latérale externe du goulot et une mâchoire (7) possèdant une face de support d'une partie de la collerette et une face d'appui pour une portion de surface latérale externe du col, la mâchoire étant montée sur un corps (6) du dispositif pour être mobile selon une direction de coulissement normale à la face de référence pour recevoir des goulots de différentes sections, le dispositif comprenant des moyens d'actionnement de la butée et de la mâchoire agencés de manière à ce que la zone s'étendant à l'aplomb du goulot des récipients tout au long de la ligne de déplacement demeure libre d'accès, la ligne de déplacement (1) comprenant au moins un tronçon circulaire centré sur un axe de rotation et le point de référence est d'un côté du goulot opposé à l'axe de rotation.

5. Dispositif selon la revendication 4, dans lequel la mâchoire (7) est reliée au corps (6) par un élément de rappel élastique (12) -rappelant la mâchoire vers une position correspondant à la plus petite section de goulot (103).

6. Dispositif selon la revendication 5, dans lequel la mâchoire (7) comprend une plaque inférieure (9.2) et une plaque supérieure (9.1) parallèles l'une à l'autre et pourvues chacune d'une découpe (10) en V pour recevoir une portion du col (101, 103) de telle manière que la collerette (102) repose sur la plaque inférieure (92).

7. Dispositif selon la revendication 6, dans lequel le V présente un angle de 108° environ.

8. Dispositif selon la revendication, 5, la butée (15) est solidaire d'un doigt (8) pivotant entre une position active de référence et une position escamotée pour permettre la mise en place du goulot (103) dans le dispositif et l'extraction du goulot du dispositif.

9. Dispositif selon la revendication 8, dans lequel une portion du doigt (8) est reçue entre deux parois (9.1, 9.2) de la mâchoire (7) guidant le doigt lors de son pivotement.

10. Dispositif selon la revendication 4, dans lequel le corps (6) du dispositif étant destiné à être monté sur une plate-forme mobile (2, 3), la butée comprend un rail de guidage (25.1, 25.2) s'étendant en regard de la plateforme.

11. Dispositif selon la revendication 4, comprenant un moyen de réglage (21, 22, 23, 24) en position de la mâchoire (7) le long de la direction de coulissement et deux bras latéraux (27) articulés au corps pour avoir des extrémités libres de support de la collerette réglables en écartement de manière synchronisée avec la mâchoire entre deux positions extrêmes correspondant à deux sections extrêmes de goulots.

12. Dispositif selon la revendication 11, dans lequel les bras latéraux (27) sont reliés à la mâchoire (7) par des éléments de came (28, 29) tels qu'ils provoquent un déplacement synchronisé des bras avec la mâchoire.

13. Dispositif selon la revendication 11, dans lequel la mâchoire (7) est reliée à une extrémité d'une tringle (21) ayant une extrémité opposée coopérant avec le moyen de réglage en position.

14. Dispositif selon la revendication 13, dans lequel la mâchoire (7) est montée sur la tringle (21) pour coulisser selon un débattement de sécurité maintenu à sa valeur minimale par un organe de rappel élastique.

15. Installation de traitement de récipients ayant des goulots de sections différentes, comprenant au moins une plateforme équipée de dispositifs conformes à l'une quelconque des revendications 4 à 14.

## Patentansprüche

1. Verfahren zur Behälterpositionierung in einer Anlage zur Behandlung von Behältern, die Halsendstücke (103) mit unterschiedlichen Querschnitten haben, wobei das Verfahren den Schritt des Verschiebens der Behälter entlang einer Verschiebungslinie (1) für die Behälter in der Anlage umfasst, während ein Bezugspunkt der Halsendstücke auf dieser Verschiebungslinie beibehalten wird, wobei die Verschiebungslinie allen Querschnitten von Halsendstücken gemeinsam ist und der Bezugspunkt der Halsendstücke unabhängig vom Querschnitt des Halsendstückes des Behälters der gleiche ist, **dadurch gekennzeichnet, dass** sich der Bezugspunkt derart auf einer äußeren Seitenfläche des Halsendstückes befindet, dass die Halsendstücke die Verschiebungslinie tangieren, wobei die Positionierung erfolgt, indem man freien Zugang zu der Zone lässt, die sich in senkrechter Flucht mit dem Halsendstück des Behälters erstreckt, wobei die Verschiebungslinie (1) mindestens einen kreisförmigen Abschnitt umfasst, der auf eine Drehachse zentriert ist, und der Bezugspunkt auf einer Seite des Halsendstückes ist, die der Drehachse entgegengesetzt ist.

2. Verfahren nach Anspruch 1, wobei, da die Anlage zwei drehbare Transportplattformen (2, 3) umfasst, die zueinander tangential sind, und die Verschiebungslinie (1) zumindest teilweise um diese Plattformen herum verläuft, das Verfahren den Schritt des Übergebens der Behälter von einer Plattform zur anderen umfasst, indem man die Halsendstücke (103) der Behälter von einer Seite der Verschiebungslinie zur anderen übergibt und man gleichzeitig den Bezugspunkt von einer Seite der Halsendstücke auf die andere überträgt.

3. Verfahren nach Anspruch 1, wobei, da die Behandlungsanlage in einer Füllzone mindestens eine Fülldüse umfasst, die Verschiebungslinie (1), die allen Querschnitten von Halsendstücken (103) gemeinsam ist, in der Füllzone so definiert ist, dass sie sich unter der Fülldüse erstreckt, indem sie gegenüber derselben derart seitlich versetzt ist, dass das Halsendstück mit dem kleinsten Querschnitt unter der Fülldüse zentriert ist.

4. Vorrichtung zur Positionierung von Behältern entlang einer Verschiebungslinie, die einen Körper (100) und einen Hals (101) umfassen, der einen vorstehenden Kragen (102) und ein über dem Kragen angeordnetes Halsendstück (103) umfasst, **dadurch gekennzeichnet, dass** die Vorrichtung einen Anschlag umfasst, der eine Bezugsfläche (15, 25) für die Anlage einer äußeren Seitenfläche des Halsendstückes hat, sowie eine Spannbacke (7), die eine Haltefläche zum Halten eines Teils des Kragens und eine Anlagefläche für einen Abschnitt der äußeren Seitenfläche des Halses hat, wobei die Spannbacke derart an einem Körper (6) der Vorrichtung gelagert ist, dass sie in einer zur Bezugsfläche senkrechten Verschiebungsrichtung beweglich ist, um Halsendstücke unterschiedlicher Querschnitte aufzunehmen, wobei die Vorrichtung Betätigungsmittel zum Betätigen des Anschlages und der Spannbacke umfasst, die derart ausgebildet sind, dass die Zone, die sich in senkrechter Flucht mit dem Halsendstück der Behälter entlang der gesamten Verschiebungslinie erstreckt, frei zugänglich bleibt, wobei die Verschiebungslinie (1) mindestens einen kreisförmigen Abschnitt umfasst, der auf eine Drehachse zentriert ist, und der Bezugspunkt auf einer Seite des Halsendstückes ist, die der Drehachse entgegengesetzt ist.

5. Vorrichtung nach Anspruch 4, wobei die Spannbacke (7) mit dem Körper (6) über ein elastisches Rückstellelement (12) verbunden ist, das die Spannbacke in eine Position rückstellt, die dem kleinsten Querschnitt eines Halsendstückes (103) entspricht.

6. Vorrichtung nach Anspruch 5, wobei die Spannbacke (7) eine untere Platte (9.2) und eine obere Platte (9.1) umfasst, die zueinander parallel und jeweils mit einem V-förmigen Ausschnitt versehen sind, um einen Teil des Halses (101, 103) derart aufzunehmen, dass der Kragen (102) auf der unteren Platte (92) aufliegt.

7. Vorrichtung nach Anspruch 6, wobei das V einen Winkel von ungefähr 108° aufweist.

8. Vorrichtung nach Anspruch 5, wobei der Anschlag (15) mit einem Finger (8) verbunden ist, der zwischen einer aktiven Bezugsposition und einer ausgerückten Position verschwenkbar ist, um das Platzieren des Halsendstückes (103) in der Vorrichtung und das Herausziehen des Halsendstückes aus der Vorrichtung zu gestatten.

9. Vorrichtung nach Anspruch 8, wobei ein Abschnitt des Fingers (8) zwischen zwei Wänden (9.1, 9.2) der Spannbacke (7) aufgenommen ist, die den Finger bei seinem Verschwenken führen.

10. Vorrichtung nach Anspruch 4, wobei, da der Körper (6) der Vorrichtung dazu bestimmt ist, auf einer beweglichen Plattform (2, 3) montiert zu werden, der Anschlag eine Führungsschiene (25.1, 25.2) umfasst, die sich gegenüber der Plattform erstreckt.

11. Vorrichtung nach Anspruch 4, umfassend Positionsregelungsmittel (21, 22, 23, 24) zur Positionsregelung der Spannbacke (7) entlang der Verschiebungsrichtung und zwei seitliche Arme (27), die am Körper angelenkt sind, um freie Enden zum Halten des Kragens zu haben, die bezüglich ihres Abstandes auf mit der Spannbacke synchronisierte Weise zwischen zwei Endstellungen einstellbar sind, die zwei Endquerschnitten von Halsendstücken entsprechen.

12. Vorrichtung nach Anspruch 11, wobei die seitlichen Arme (27) mit der Spannbacke (7) derart über Nockenelemente (28, 29) verbunden sind, dass sie eine synchronisierte Verschiebung der Arme mit der Spannbacke hervorrufen.

13. Vorrichtung nach Anspruch 11, wobei die Spannbacke (7) mit einem Ende einer Stange (21) verbunden ist, die ein entgegengesetztes Ende hat, das mit den Positionsregelungsmitteln zusammenwirkt.

14. Vorrichtung nach Anspruch 13, wobei die Spannbacke (7) so an der Stange (21) gelagert ist, dass sie sich um eine Sicherheitsauslenkung verschieben kann, die durch ein elastisches Rückstellelement auf ihrem Minimalwert gehalten wird.

15. Anlage zur Behandlung von Behältern, die Halsendstücke mit unterschiedlichen Querschnitten haben, umfassend mindestens eine Plattform, die mit Vorrichtungen gemäß einem der Ansprüche 4 bis 14 ausgestattet ist.

## Claims

1. A method of positioning containers in an installation for processing containers having mouth segments (103) of different cross-sections, the method comprising the step of moving the containers along a container movement line (1) in an installation while maintaining a reference point on each of the mouth segments on said movement line, the movement line being common to all mouth segment cross-sections, and the reference points on the mouth segments being the same regardless of the cross-sections of the mouth segments of the containers, said method being **characterized in that** the reference point is situated on an outside side surface of the mouth segment in a manner such that the mouth segments are tangential to the movement line, the positioning being done whilst leaving free access to the zone extending vertically above the mouth segment of the container, the movement line (1) comprising at least one circular segment centered on an axis of rotation and the reference point is on a side of the mouth segment that is opposite from the axis of rotation.

2. A method according to claim 1, wherein, firstly with the installation comprising two rotary conveyor platforms (2, 3) that are tangential to each other, and secondly with the movement line (1) winding at least partially around said platforms, the method includes the step of having the containers go from one platform to the other by having the mouth segments (103) of the containers go from one side of the movement line to the other, and simultaneously having the reference points go from one side of the mouth segments to the other.

3. A method according to claim 1, wherein, with the processing installation further comprising at least one filler nozzle in a filling zone, the movement line (1) that is common to all of the cross-sections of mouth segments (103) is defined in the filling zone to extend under the filler nozzle while being offset laterally relative to said filler nozzle, in a manner such the mouth segment of smallest cross-section is centered under the filler nozzle.

4. A positioning device for positioning containers along a movement line, each of which comprises a body (100) and a neck (101) provided with a projecting collar (102) and with a mouth segment (103) above the collar, said positioning device being **characterized in that** the device is provided with an abutment having a reference face (15, 25) for bearing against an outside side surface of the mouth segment and a jaw (7) that has a support face for supporting a portion of the collar and a bearing face for bearing against a portion of the outside side surface of the neck, the jaw being mounted on a body (6) of the device to be movable in a sliding direction that is normal to the reference face so as to receive mouth segments of different cross-sections, said device comprising means for actuating the abutment and the jaw being arranged in a manner that the zone extending vertically above the mouth segment of the container all along the movement line remains free for access, the movement line comprising at least one circular segment centered on an axis of rotation and the reference point being on a side of the mouth segment that is opposite from the axis of rotation.

5. A device according to claim 4, wherein the jaw (7) is connected to the body (6) via a resilient return element (12) urging the jaw back into a position corresponding to the smallest cross-section of mouth segment (103).

6. A device according to claim 5, wherein the jaw (7) comprises a bottom plate (9.2) and a top plate (9.1) that are parallel to each other, each of which plates is provided with a V-shaped cutout (10) for receiving a portion of the neck (101, 103) in a manner such that the collar (102) rests on the bottom plate (92).

7. A device according to claim 6, wherein the V-shape presents an angle of about 108°.

8. A device according to claim 5, wherein the abutment (15) is secured to a finger (8) that is mounted to pivot between an active reference position and a retracted position for making it possible to put the mouth segment (103) in place in the device and to extract the mouth segment from the device.

9. A device according to claim 8, wherein a portion of the finger (8) is received between two walls (9.1, 9.2) of the jaw (7) guiding the finger as it pivots.

10. A device according to claim 4, wherein, with the body (6) of the device being designed to be mounted on a moving platform (2, 3), the abutment comprises a guide rail (25.1, 25.2) extending facing the platform.

11. A device according to claim 4, provided with position adjustment means (21, 22, 23, 24) for adjusting the position of the jaw (7) along the sliding direction, and with two side arms (27) hinged to the body to have free ends for supporting the collar, the spacing between said free ends being adjustable in a manner synchronized with the jaw between two extreme positions corresponding to two extreme mouth segment cross-sections.

12. A device according to claim 11, wherein the side arms (27) are connected to the jaw (7) via cam elements (28, 29) that are such that they cause the arms to move in a manner synchronized with the jaw.

13. A device according to claim 11, wherein the jaw (7) is connected to an end of a rod (21) having an opposite end co-operating with the position adjustment means.

14. A device according to claim 13, wherein the jaw (7) is mounted on the rod (21) to slide over a safety stroke maintained at its minimum value by a resilient return member.

15. An installation for processing containers having mouth segments of different cross-sections, said installation including at least one platform equipped with devices according to any one of claims 4 to 14.
